# EUROPÄISCHE PATENTSCHRIFT

(11) **EP 3 642 047 B1**
(45) Veröffentlichungstag und Bekanntmachung des Hinweises auf die Patenterteilung: **05.05.2021**
(21) Anmeldenummer: 19769373.2
(22) Anmeldetag: 22.08.2019
(51) Int. Cl.: B60B 30/08, B60B 15/28, B60B 29/00

(54) **RADGEWICHTMONTAGEVORRICHTUNG SOWIE VERFAHREN DAMIT**
WHEEL WEIGHT ASSEMBLY DEVICE, AND METHOD USING SAME
DISPOSITIF DE MONTAGE DE POIDS DE ROUE ET PROCÉDÉ S'Y RAPPORTANT

(30) Priorität: 27.08.2018 DE 202018104906 U
(43) Veröffentlichungstag der Anmeldung: 29.04.2020
(73) Patentinhaber: Heidenreich, Jan Henning, 21358 Mechtersen (DE)
(72) Erfinder: Heidenreich, Jan Henning, 21358 Mechtersen (DE)
(74) Vertreter: Hansen, Jochen
(86) Internationale Anmeldenummer: PCT/DE2019/100759
(87) Internationale Veröffentlichungsnummer: WO 2020/043236

(56) Entgegenhaltungen:
- EP-A1- 2 676 807
- DE-A1-102012 106 073
- DE-A1-102013 106 240
- US-A1- 2014 352 133

## Beschreibung

Die Erfindung betrifft eine Radgewichtmontagevorrichtung für An- und Abbau eines Radgewichts an einem Fahrzeugrad, insbesondere für landwirtschaftliche Zugmaschinen, wobei das Radgewicht im Wesentlichen eine Kreisringscheibe mit einem zentralen Durchgriff ist. Ferner betrifft die Erfindung ein Montageverfahren mit dieser Radgewichtmontagevorrichtung.

Radgewichte werden insbesondere bei landwirtschaftlichen Zugmaschinen (Traktoren) verwendet, um die Achslast und damit die Traktion der Zugmaschine bedarfsweise zu erhöhen, ohne das dabei die Maschine und insbesondere die Achsen und Achswellen deutlich höher belastet werden. Ferner können Sie auch als Kontergewicht, z.B. für Frontladerarbeiten verwendet werden, ohne den hinteren Anbauraum zu beeinträchtigen.

Leider ist die Montage der Radgewichte, die Gewichte von wenigen 10 Kilogramm bis aktuell ca. 1.250 Kilogramm aufweisen, ohne eine geeignete Montagevorrichtung schwierig und unfallträchtig.

Im Stand der Technik sind zwar für die herstellerseitige Erstmontage am Fließband kraftbetätigte Spezialvorrichtungen bekannt, diese sind jedoch für den Landwirt oder kleinere Werkstätten viel zu kostenaufwendig und benötigen eine erhebliche Stellfläche.

Die DE 10 2012 106 073 A1 beschreibt eine Hebevorrichtung und Verfahren zur Montage und Demontage eines Rades, die mobil ausgebildet ist und Arbeiten an der Karosserie oder dem Antriebstrang als auch für die Montage und Demontage von Rädern oder Arbeiten am Bremssystem eines Fahrzeugs ermöglicht. Dabei ist die Hebevorrichtung jedoch so ausgestaltet, dass das Rad als Ganzes abgenommen werden kann.

Die DE 20 2006 020 649 U1 beschreibt einen Radmontagelift zum Anheben und Manövrieren von Fahrzeugrädern bei der Montage am Kraftfahrzeug, bei der eine Radauflageeinrichtung entlang einer Führungseinrichtung vertikal beweglich geführt ist, wobei zusätzlich ein Pneumatikzylinder vorgesehen ist, mit dem eine Höhenfeineinstellung ermöglicht wird.

Die JP H09-2008 A beschreibt ein Radmontagelift, bei dem das auf den Hebearm der Vorrichtung abgelegte Fahrzeugrad durch einen elastischen Körper (Federspannung) im Wesentlichen austariert ist, um eine manuelle Höhenverstellung leicht vornehmen zu können.

Aus der DE 10 2013 106240 A1 ist ein Montagewagen zum Auf- und Abmontieren von Kraftfahrzeugrädern auf Naben von Kraftfahrzeugen bekannt, der eine höhenverstellbare Hubgabel zum außenseitigen Halten des zu montierenden Kraftfahrzeugrades und eine Schraubeinrichtung zum Anziehen/Lösen eines Zentralverschlusses (zentrale Radmutter) aufweisen.

Ferner ist aus der US 2014/0352133 A1 ein Verfahren und eine Vorrichtung zum Montieren bzw. Abmontieren von großen Rädern an Arbeitsgeräten bekannt, wobei die Vorrichtung von der Gabel eines Gabelstaplers aufnehmbar ausgestaltet ist. Dabei wird das zu habende große Rad von dieser Vorrichtung an der Außenseite der Felge des Rades an dort vorgesehenen Hilfsbohrungen fixiert und so auf die Radnabe des Fahrzeugs gesetzt. Die Vorrichtung weist einen ausreichenden Freiraum auf, sodass dann die herkömmlichen Radmuttern zur Festlegung des großen Rades an der Nabe montierbar sind.

Die EP 2 676 807 A1 beschreibt eine Radgewichtsanordnung zur Verwendung an einem Fahrzeugrad mit einer Radfelge, an der ein kreisringförmiges Startergewicht fest montiert ist. An diesem Startergewicht ist ein weiteres größeres, äußeres Gewicht montiert, das leicht auswechselbar ist. Für einen Radwechsel ist lediglich das äußere große Radgewicht abzunehmen, wohingegen das Startergewicht an der Felge fest montiert verbleiben kann.

Ausgehend von der DE 10 2013 106 240 A1 bzw. der EP 2 676 807 A1 ist es Aufgabe der Erfindung, eine Vorrichtung bzw. ein Verfahren zur sicheren Montage von Radgewichten zu ermöglichen.

Gelöst wird diese Aufgabe mit einer Radgewichtmontagevorrichtung gemäß Anspruch 1 sowie einem Verfahren für den An- und Abbau eines Radgewichts mit einer entsprechenden Vorrichtung gemäß Anspruch 11.

Dadurch, dass ein länglicher Kragarm mit einem freien Ende vorgesehen ist, auf dem eine um die Kragarmachse des Kragarms frei drehbare Radgewichtaufnahme angeordnet ist, wobei die Radgewichtaufnahme wenigstens drei zur Kragarmachse parallel und radial so beabstandete Tragkufen hat, sodass es in den zentralen Durchgriff des Radgewichts einschiebbar ist, kann das Radgewicht mit seinem zentralen Durchgriff mit der Radgewichtaufnahme auf den länglichen Kragarm aufgenommen werden. Dabei sollten die bevorzugt drei zur Kragarmachse parallel und radial beabstandeten Tragkufen um je 120 ° zueinander versetzt angeordnet sein. Durch die Verdrehbarkeit der Radgewichtaufnahme auf dem Kragarm kann das Radgewicht um die Drehachse soweit gedreht werden, bis die am Radgewicht angeordneten Montagelöcher mit den Radbolzen oder den Aufnahmelöchern für Befestigungsschrauben fluchten. Die drehbare Lagerung wird durch das Vorsehen entsprechender Wälzlager auf dem Kragarm realisiert, sodass beim Verdrehen des Radgewichtes keine erhöhte Gefahr eines Abrutschens des Radgewichts von der Radgewichtaufnahme besteht.

Wenn am freien Ende der Radgewichtaufnahme von einer freigegebenen in eine hintergreifende Stellung verstellbare Hintergreifungsmittel vorgesehen sind, die in hintergreifender Stellung das Radgewicht auf der Radgewichtaufnahme arretieren, wird das von der Radgewichtmontagevorrichtung aufgenommene Radgewicht auf der Radgewichtaufnahme sicher gehalten und kann auch nicht bei einer nicht optimal horizontal ausgerichteten Kragarmachse oder bei Erschütterungen etc. von der Radgewichtmontagevorrichtung ungewollt abrutschen. Weiter verhindern über federbelastete Rastbolzen arretierbare und der jeweiligen Radgewichtstärke anpassbare Anschläge das Verrutschen des Radgewichts auf den Kufen in Richtung Bediener/Hebevorrichtung. Auch ermöglichen diese Anschläge bei einer Wiederaufnahme des Radgewichts die genaue und anliegende Positionierung des Radgewichts an den vorderseitigen Verriegelungsfingern, sodass ein späteres Heraus-, bzw. Heranschieben des Radgewichts an die Schraubfläche der Felge nicht nötig ist.

Dadurch, dass das Hintergreifungsmittel einen um eine parallel zur Kragarmachse und den Kufen angeordnete Drehachse verschwenkbaren Riegel hat, der über ein an der dem freien Ende gegenüberliegenden Seite angeordnetes Betätigungsmittel betätigbar ist, wird das Hintergreifungsmittel technisch einfach realisiert. Das Betätigungsmittel kann beispielsweise ein Handhebel sein, der auf der Außenseite (der dem freien Ende des Kragarmes gegenüberliegenden Seite) angeordnet ist und die Betätigung über eine darin gelagerte Welle auf den an dieser Welle aufsitzenden Riegel übertragen werden. Bevorzugt ist der Riegel bzw. das Hintergreifungsmittel in der hintergreifenden Stellung arretiert, um Fehlbetätigungen zu vermeiden.

Zudem ist es damit möglich, dass innerhalb des zentralen Durchgriffs zwischen den Kufen und dem Kragarm ein frei zugänglicher Betätigungsraum verbleibt, um die Befestigungsmittel für das Radgewicht lösen oder ansetzen zu können. Dieser Betätigungsraum zwischen den Kufen und dem Kragarm sollte so bemessen sein, dass eine Bedienperson dort den Zugriff zu Radmuttern bzw. Radschrauben bzw. den Befestigungsschrauben für das Radgewicht hat. Somit können die Radgewichte einzeln gelöst bzw. wieder angesetzt werden. Ferner bietet der Betätigungsraum zudem die Möglichkeit bzw. den Vorteil nur den Adapter, über den das Radgewicht mit der Felge verbunden ist, zu lösen/zu demontieren, welches einen ganzen Arbeitsschritt bei der Radgewicht- De- und Wiedermontage einspart. Ein besonderer Vorteil ergibt sich bei mehreren, hintereinander angeschraubten Radgewichten. Hierbei können alle Arbeitsschritte in einem Vorgang zusammengefasst werden und es entfallen die einzelnen Arbeitsschritte, die notwendig wären, um jedes Radgewicht einzeln zu de-/montieren.

Wenn die Tragkufen mit Auflagen aus einem festen und gleitfähigen Kunststoff versehen sind, wird das Einschieben der Radgewichtaufnahme in den zentralen Durchgang des Radgewichts erleichtert. Ferner wird eine Beschädigung des Lacks auf dem Radgewicht vermieden.

Dadurch, dass der Kragarm mit einem Ladegeschirrbaum fest verbunden ist, der eine Hebeöse nahe über dem Schwerpunkt der Radgewichtmontagevorrichtung mit dem Radgewicht hat, wird quasi eine c-förmige Gesamtvorrichtung angegeben, die zusammen mit einem Kran, beispielsweise eine mobile Arbeitsmaschine, wie Bagger oder mittels Frontlader am Ackerschlepper der auch in kleinen Werkstätten oder auch in landwirtschaftlichen Betrieben nutzbar und beim Ein- oder Abbau von Radgewichten einsetzbar ist. Durch die nahe über dem Schwerpunkt der Radgewichtmontagevorrichtung mit dem Radgewicht angeordnete Hebeöse ist die Vorrichtung mit dem Radgewicht möglichst so austariert, dass der Kragarm im Wesentlichen horizontal orientiert ist.

In weiterer Ausbildung besteht bevorzugt der Ladegeschirrbaum aus einem unteren Baum, der nahezu senkrecht beispielsweise 70° bis 90°, insbesondere 80°, zum Kragarm ausgerichtet ist, und einem oberen Baum, wobei der obere Baum in einem Winkel von 110° bis 150°, insbesondere 120° bis 140°, zum unteren Baum über dem Kragarm ausgerichtet ist. Die Länge des unteren Baumes des Ladegeschirrbaums sollte dabei so weit reichen, dass ausreichender Freiraum zu den Aufbauten der Zugmaschine, insbesondere den Radkästen/Schutzblechen und dem Führerhaus gewahrt ist. Der in dem eingegrenzten Winkel angesetzte obere Baum, erlaubt dann eine Platzierung der Hebeöse möglichst über dem Schwerpunkt der Gesamtanordnung.

Wenn am oberen Baum die Hebeöse gegen eine Federkraft verschwenkbar oder verschiebbar ausgebildet ist, kann ein automatischer Schwerpunktausgleich, zumindest in bestimmten Belastungsbereichen, realisiert werden. Dabei kann die unbelastete Grundstellung der Hebeöse und die darauf lastende Federkraft so gewählt werden, dass bei Anheben der unbelasteten Radgewichtmontagevorrichtung sich diese ebenfalls so austariert, dass der Kragarm im Wesentlichen horizontal ausgerichtet ist. Somit ist es deutlich leichter, die Radgewichtmontagevorrichtung an das Rad einer Zugmaschine heranzuführen und in den zentralen Durchgriff des abzumontierenden Radgewichts einzuführen. Bei Belastung der Radgewichtmontagvorrichtung mit dem abmontierten oder noch anzumontierenden Radgewicht verschwenkt oder verschiebt dabei die Hebeöse gegen die Federkraft am oberen Baum in eine Lage weiter Richtung freien Ende des Tragarms orientiert, sodass auch in dieser belasteten Situation die Gesamtanordnung so austariert ist, dass der Kragarm im Wesentlichen horizontal orientiert ist. Soll die Radgewichtmontagevorrichtung für verschieden große Radgewichte verwendet werden, können verschiedene Anschlagpunkte für das jeweilige Gewicht und/oder Radgewichtmodell am oberen Baum des Ladegeschirrbaums angeordnet sein, damit stets die individuell belastete Radgewichtmontagevorrichtung mit ihrer Kragarm-Achse horizontal austariert ist.

Wenn am Ladegeschirrbaum Handgriffe und/oder Rangierräder vorgesehen sind, lässt sich der Ladegeschirrbaum über die Handgriffe - beladen mit Radgewicht - oder auch ohne Radgewicht dirigieren und insbesondere in die zentrale Durchgriffsöffnung einführen. Die Rangierräder dienen zum Rangieren und Wegstellen einer leeren Radgewichtmontagevorrichtung, damit diese den häufig begrenzten Raum in kleinen Werkstätten oder bei landwirtschaftlichen Betrieben nicht verstellt.

Dadurch, dass der Kragarm eine Gabelstapleraufnahme für eine Gabel eines Gabelstaplers aufweist, wird eine alternative Ausführungsform zu der mit einem Ladegeschirrbaum beschrieben, bei dem das Handhabungsmittel für die Radgewichtmontagevorrichtung ein Gabelstapler mit einer Gabel ist. Mit diesem Gabelstapler lassen sich die Gabel und damit der Kragarm leicht horizontal ausrichten. Durch Vorfahren des Gabelstaplers mit der an einer Gabel angeordneten Radgewichtmontagevorrichtung kann dann ebenfalls die Radgewichtaufnahme in den zentralen Durchgriff des Radgewichts eingeführt werden, um ein Radgewicht von einem Fahrzeugrad abmontieren zu können. Ebenso kann eine mit einen Radgewicht beladene Radgewichtmontagevorrichtung in dieser Ausgestaltung mit dem Gabelstapler präzise an die Einbaustelle mit horizontaler Ausrichtung des Kragarms herangefahren werden.

In jedem Falle ist es möglich das auf der Radgewichtaufnahme aufliegende Radgewicht durch die drehbare Lagerung so zu verdrehen, dass die Montagelöcher für das Anschrauben des Radgewichts mit den Radbolzen oder den Aufnahmelöchern für Befestigungsschrauben fluchten.

Nachfolgend werden vier Ausführungsbeispiele der Erfindung anhand der beiliegenden Figuren detailliert beschrieben:
Darin zeigt:
- Fig. 1: in räumlicher Ansicht ein erstes Ausführungsbeispiel einer Radgewichtmontagevorrichtung,
- Fig. 2: eine gegenüber der Ausführungsform gemäß Fig. 1 veränderte Radgewichtmontagevorrichtung mit Gabelstaplerrohren,
- Fig. 3: die in Fig. 2 dargestellte Radgewichtmontagevorrichtung beladen mit einem Radgewicht,
- Fig. 4: die in Fig. 2 und 3 räumlich dargestellte Radgewichtmontagevorrichtung in teils geschnittener Seitenansicht und mit Traktorrad,
- Fig. 5: die in Fig. 4 dargestellte Situation in räumlicher Ansicht,
- Fig. 6: ein drittes Ausführungsbeispiel einer Radgewichtmontagevorrichtung mit Fahrwerk,
- Fig. 7: ein viertes Ausführungsbeispiel einer Radgewichtmontagevorrichtung mit geänderten Kragarm und Radgewichtaufnahme und
- Fig. 8: die in Fig. 1 dargestellte Radgewichtmontagevorrichtung im Querschnitt.

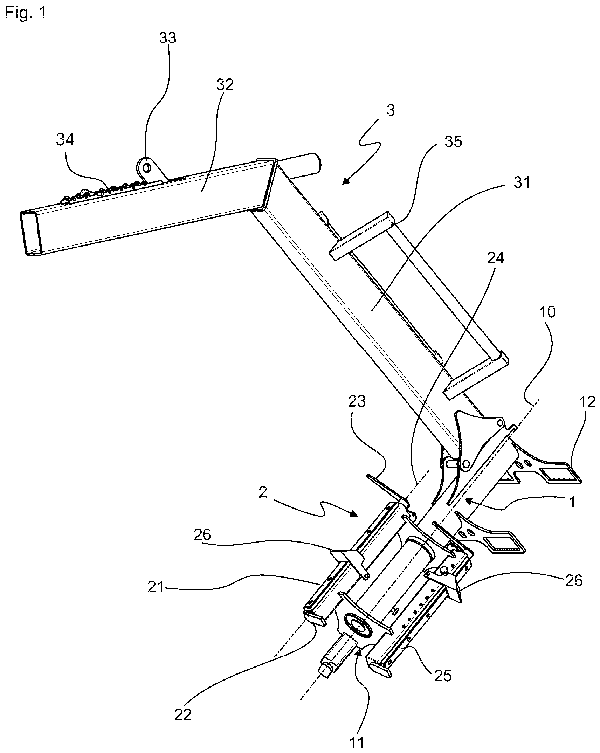

In Fig. 1 ist ein erstes Ausführungsbeispiel einer Radgewichtmontagevorrichtung in räumlicher Ansicht dargestellt. Die Radgewichtmontagevorrichtung weist einen länglichen Kragarm 1 auf, an dessen freiem Ende 11 eine Radgewichtaufnahme 2 drehbar um eine Kragarmachse 10 angeordnet ist. Die Kragarmachse 10 ist in Längserstreckung des Kragarms 1 angeordnet.

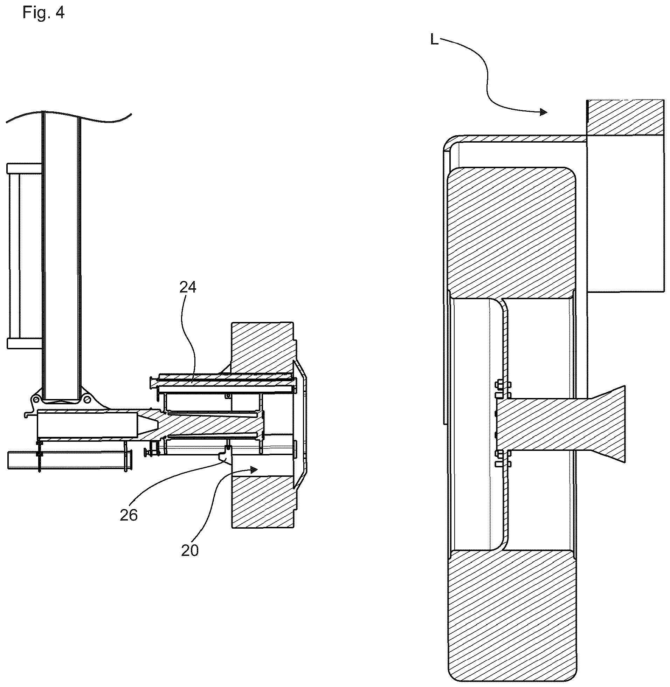

Die Radgewichtaufnahme 2 weist drei Tragkufen 21 auf, die gleichwinklig verteilt in Umfangsrichtung parallel zu der Kragarmachse 10 angeordnet sind und eine Aufnahme für einen zentralen kreisförmigen Durchgriff D des Radgewichts R bilden. Die Radgewichtaufnahme 2 weist ein Hintergreifungsmittel 22 auf, dass in hintergreifender Stellung das Radgewicht R auf der Radgewichtaufnahme 2 arretiert. Dazu ist auf der vom freien Ende 11 abwärtigen Seite der Radgewichtaufnahme 2 ein Betätigungsmittel 23 vorgesehen. Beispielsweise kann das Betätigungsmittel 23 ein Handhebel sein, der über eine Schwenkachse 24 (Fig. 4) innerhalb der Tragkufe 21 das als Riegel ausgebildete Hintergreifungsmittel 22 in die rechts unten in Fig. 1 dargestellte Stellung bringt und dort verriegelt. Damit die Radgewichtaufnahme 2 mit ihren Tragkufen 21 trotz geringen Spiels leicht in den Durchgriff D des Radgewichts R hineinrutschen kann, sind die Tragkufen 21 bevorzugt mit einer Auflage 25 aus einer gleitfähig ausgebildeten Kunststoffoberfläche versehen.

Um mit der Radgewichtmontagevorrichtung verschiedene Radgewichte R, insbesondere verschiedene Einbautiefen aufnehmen zu können, sind ferner an den Tragkufen 21 der Radgewichtaufnahme 2 lateral verstellbare Anschläge 26 vorgesehen. Bei richtiger Einstellung der Anschläge 26 wird das zu montierende oder abzunehmende Radgewicht R im vorderen, nahe dem freien Ende 11 des Kragarmes 1 gelegenen Ende der Radgewichtaufnahme 2 aufgenommen, um eine unmittelbare Montage innerhalb des Rades (Felge) des landwirtschaftlichen Fahrzeuges zu ermöglichen, wie in einer teils geschnittenen Darstellung in Fig. 4 ersichtlich ist.

Um die Radgewichtmontagevorrichtung auf unterschiedliche Radgewichte R mit unterschiedlichen Innendurchmessern des Durchgriffs D verwenden zu können, sind die Tragkufen 21 austauschbar oder mittels Adapter, die auf die Tragkufen aufstülpbar sind, anpassbar ausgebildet. Somit können mit einer Radgewichtmontagevorrichtung auch Radgewichte unterschiedlicher Hersteller mit unterschiedlichen Innendurchmessern der Durchgriffsöffnung D verwendet werden. Die Anpassung mittels austauschbarer Tragkufen 21 oder zusätzlich montierbarer Adapter kann dabei sekundenschnell vorgenommen werden.

Am Kragarm 1 ist ein Ladegeschirrbaum 3 angesetzt, der eine Hebeöse 33 nahe über dem Schwerpunkt der Radgewichtmontagevorrichtung mit aufgenommenen Radgewicht R hat. Dabei besteht der Ladegeschirrbaum 3 aus einem unteren Baum 31, der im Wesentlichen senkrecht zum Kragarm 1 ausgerichtet ist und einem oberen Baum 32. Dabei ist der obere Baum 32 in einem Winkel von 110° bis 150°, hier ca. 130° zum unteren Baum 31 über den Kragarm 1 ausgerichtet. Um eine automatische Verstellung des Schwerpunktes und somit eine im Wesentlichen horizontale Austarierung des Kragarmes 1 im unbeladenen Zustand der Radgewichtmontagevorrichtung und im beladenen Zustand erreichen zu können, ist die Hebeöse 33 am oberen Baum 32 gegen eine Federkraft verschieb- oder verschwenkbar angeschlagen. Dabei sollte die Federkraft so eingestellt sein, dass die Hebeöse 33 bei angehobener leerer Radgewichtmontagevorrichtung nicht verschwenkt und bei mit Radgewicht R beladener Radgewichtmontagevorrichtung gegen die Federkraft auf einen weiter über dem Radgewicht R orientierten Schwerpunkt verschwenkt. Dabei kann am oberen Baum 32 eine Anschlagpositionierung 34 vorgesehen sein, um verschiedene Radgewichtgrößen und -gewichte mit der Radgewichtmontagevorrichtung handhaben zu können. Je nach anzuhebendem Radgewicht R wird dann die Anschlagpositionierung 34 eingestellt. Die Federkraft wird beispielsweise von einer im oberen Baum integrierten Schraubenzugfeder oder Gasdruckfeder, ggf. auch mit Umlenkung und Übersetzung, erzeugt.

Am unteren Baum 31 sind Handgriffe 35 zum Führen der Radgewichtmontagevorrichtung vorgesehen, insbesondere wenn diese über Hebeöse 33 an einem Kran K angehoben zu positionieren ist.

Alternativ zur Handhabung der Radgewichtmontagevorrichtung mit einem Kran K über die Hebeöse 33 kann die gesamte Vorrichtung auch von einem Gabelstapler aufgenommen und positioniert werden. Dazu sind am Kragarm 1 Stapleraufnahmen 12 vorgesehen, durch die zwei enger eingestellte Gabeln eines Gabelstaplers einführbar sind und folglich die Vorrichtung mit Handhabung des Gabelstaplers angehoben und positioniert werden kann.

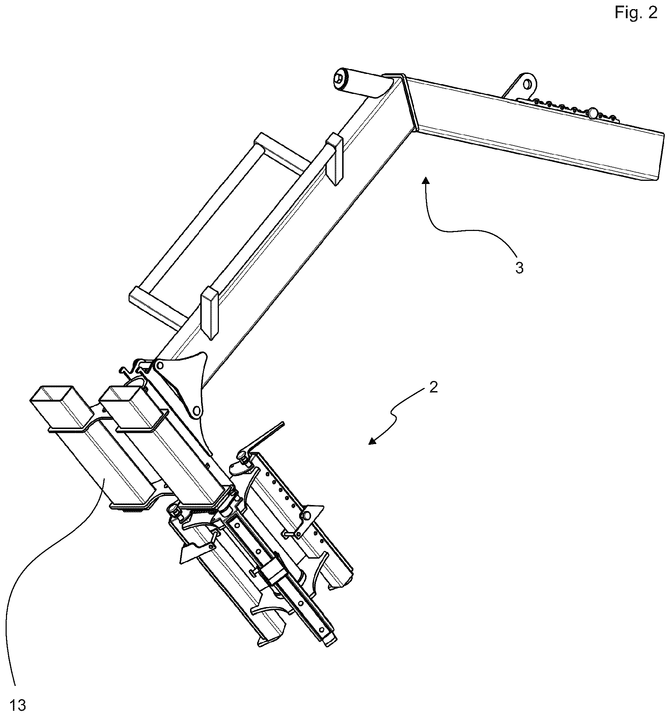

In einer alternativen Ausführungsform gemäß Fig. 2 sind die Stapleraufnahmen 12 mit Gabelstaplerrechteckrohren 13 versehen, um das Einführen (und Ausfädeln) der Gabelstaplergabeln zu erleichtern. Bei einer reinen Nutzung über Gabelstapler kann die Radgewichtmontagevorrichtung auch ohne Ladegeschirrbaum 3 verwendet werden. Dafür kann der Ladegeschirrbaum 3 lösbar an dem Kragarm 1 befestigt sein. Neben dem Gabelstaplerrechteckrohr 13 an der Stapleraufnahme 12 am Kragarm 1 ist das Betätigungsmittel 23 in Form des Handhebels und die verschiedene Positionierung der Riegel 22 je nach Arretierungszustand des Handhebels 23 dargestellt. Ferner ist gut erkennbar, dass die auf den Tragkufen 21 aufreitenden Anschläge 26 in drei verschiedenen Positionen eingestellt sind. Diese Positionen geben die mögliche Stärke des aufzunehmenden Radgewichts R an. Selbstverständlich werden bei Benutzung der Radgewichtmontagevorrichtung alle drei Anschläge 26 auf die gleiche Position gestellt.

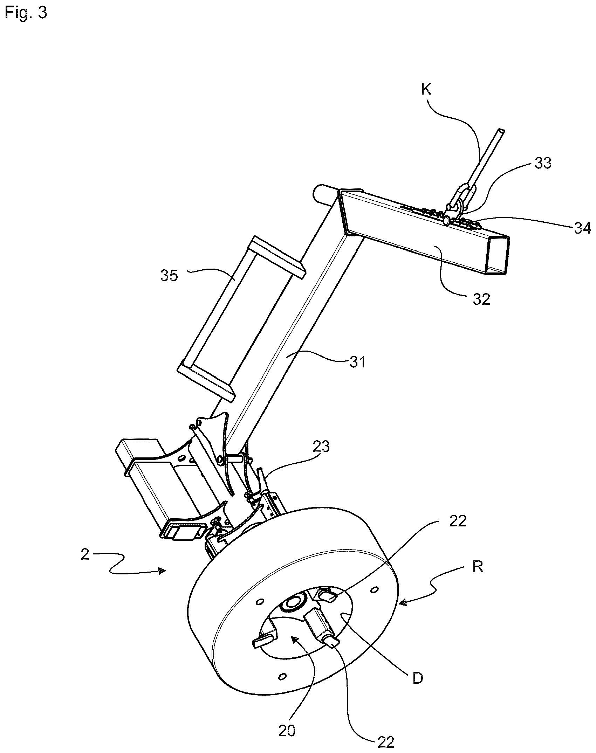

In Fig. 3 ist diese Ausführungsform der Radgewichtmontagevorrichtung räumlich mit einem angesetzten Radgewicht R dargestellt. Das Radgewicht R ist auf der Radgewichtaufnahme 2 auf den drei Tragkufen 21 bis an die Anschläge (nur sichtbar in den Figuren 2 und 4) mit seinem Durchgriff D aufgenommen. In Fig. 3 sind zwei der drei als Riegel ausgebildeten Hintergreifungsmittel 22 in die Sperrstellung verschwenkt. Das dritte Hintergreifungsmittel 22 muss noch über Betätigungshebel 23 in die Sperrstellung verschwenkt werden. Ferner ist in Fig. 3 der Betätigungsraum 20, der innerhalb des Durchgriffs D des Radgewichts R freibleibt, obwohl das Radgewicht R auf der Radgewichtaufnahme 2 aufgenommen ist. Eine Montageperson kann also durch diesen Betätigungsraum 20 von außenseitig auf die Radmuttern bzw. Befestigungsmittel für das Radgewicht R zugreifen.

Ferner ist in Fig. 3 ein Hebzeug eines Kranes K dargestellt, dass in die Hebeöse 33 am oberen Baum 32 eingreift. Im hier dargestellten angehobenen Zustand der Radgewichtmontagevorrichtung mit dem auf der Radgewichtaufnahme 2 aufgesetzten Radgewicht R ist die Hebeöse 33 gegen die Federkraft ausgeschwenkt und bis an die vorgewählte Anschlagpositionierung 34 herangeschwenkt, sodass die gesamte Radgewichtmontagevorrichtung mit Radgewicht R am Kran K so austarriert hängt, dass die Kragarmachse 10 im Wesentlichen horizontal ausgerichtet ist. Diese Situation ist auch in Fig. 4 wiedergegeben.

In Fig. 4 ist die Ausführungsform gemäß Fig. 2 und 3 nochmals in teils geschnittener Seitenansicht dargestellt. Neben der Radgewichtmontagevorrichtung mit Radgewicht R ist eine landwirtschaftliche Maschine L mit einem Rad, an dem das Radgewicht R angesetzt werden soll, angedeutet.

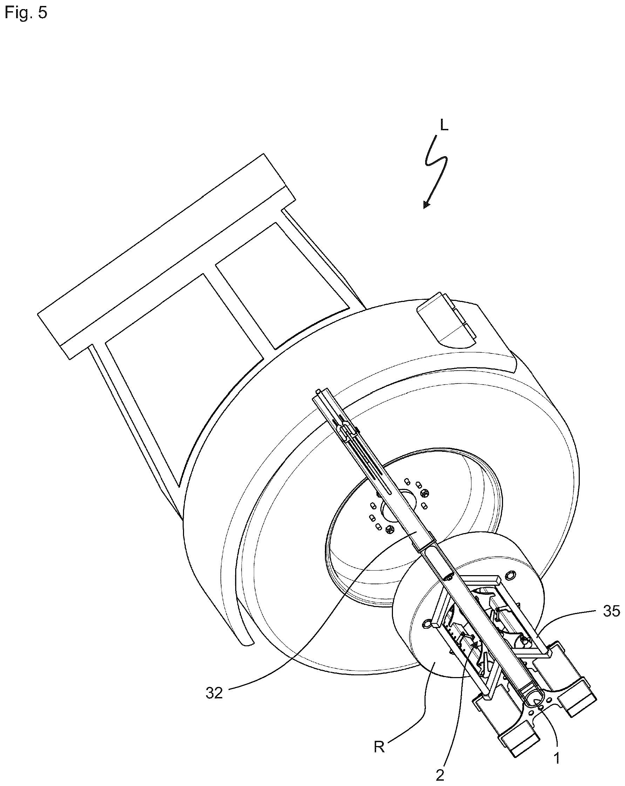

In Fig. 4 ist im Querschnitt erkennbar, das der Betätigungsraum 20 Zugriff für einen Monteur zwischen Radgewicht R und Radgewichtaufnahme 2 erlaubt, sodass Radmuttern bzw. Befestigungsmittel für das Radgewicht R an die Felge der landwirtschaftlichen Maschine L ansetzbar sind. Die gleiche Situation ist in Fig. 5 in räumlicher Ansicht dargestellt, woraus die Zuordnung der Bauteile und Lage bei Montage gut erkennbar ist.

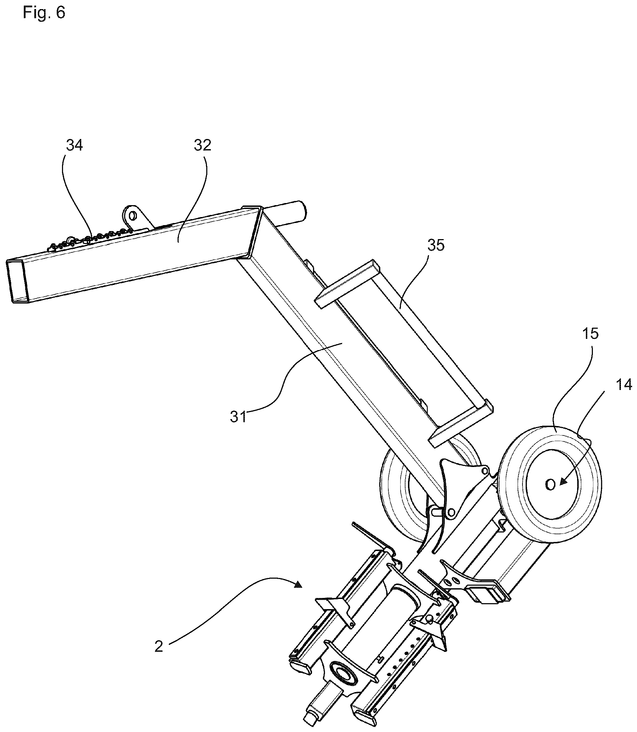

In Fig. 6 ist in räumlicher Ansicht eine weitere Abwandlung der Radgewichtmontagevorrichtung dargestellt, wobei die grundsätzliche Vorrichtung der Ausführung gemäß Figuren 3 und 4 entspricht, wobei jedoch am Kragarm 1 ein Fahrwerk 14 mit zwei Rädern 15 vorgesehen ist, um die Radgewichtmontagevorrichtung bei Nichtgebrauch in der Werkstatt bewegen zu können, bspw. die Radgewichtmontagevorrichtung zu einem Lagerplatz oder von einem Lagerplatz zur Montagehalle zu führen.

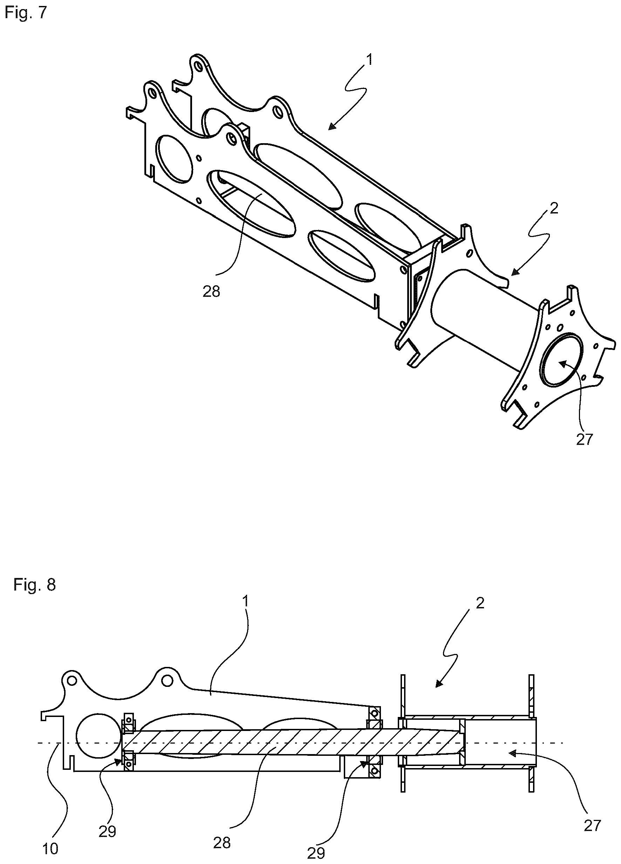

In den Fig. 7 und 8 ist eine Radgewichtaufnahme 2 in einer alternativen Ausgestaltung in räumlicher Ansicht (Fig. 7) und im Querschnitt (Fig. 8) entlang einer durch die Kragarmachse 10 führenden vertikalen Ebene geschnitten dargestellt. Dabei ist in dieser Ausführungsform die drehbare Lagerung der Radgewichtaufnahme 2 im Kragarm 1 aufgenommen, um einen Freiraum 27 am freien Ende der Radaufnahme 2 um die Kragarmachse 10 auszubilden. Dabei ist der Freiraum 27 so ausgestaltet, dass beispielsweise auch landwirtschaftliche Fahrzeuge mit in der Spurbreite verstellbaren Achsen mit Radgewichten versehen werden können. Bei derartigen landwirtschaftlichen Fahrzeugen stehen nämlich häufig Achsstummel im Zentrum der Radnabe vor, sodass dafür der entsprechende Freiraum 27 an der Radgewichtaufnahme 2 vorzusehen ist, damit das davon aufgenommene Radgewicht möglichst nahe an die Felge des landwirtschaftlichen Fahrzeugs zur Befestigung angelegt werden kann. Damit ist die Radgewichtaufnahme 2 mit einer in den Kragarm 1 hineinreichenden Welle 28 über dort angeordnete Wälzlager 29 drehbar um Tragarmachse 10 befestigt.

Nachfolgend wird die Montage eines Radgewichts R an einem landwirtschaftlichen Fahrzeug L mithilfe der erfindungsgemäßen Radgewichtmontagevorrichtung, insbesondere unter Bezugnahme auf Fig. 3 bis 5 beschrieben.

Dabei wird davon ausgegangen, dass die Radgewichtmontagevorrichtung mit einem Kran K über Hebeöse 33 angehoben und gehandhabt wird. Dabei wird die Radgewichtmontagevorrichtung im nicht beladenen Zustand an dem Kran K an der Hebeöse 33 angehoben, wobei der Lagerungspunkt aufgrund der Federkraft an einer Position verbleibt, die oberhalb des Schwerpunktes der gesamten, unbeladenen Radgewichtmontagevorrichtung liegt. Entsprechend ist der Kragarm 1 beim Anheben im Wesentlichen waagerecht ausgerichtet. Nunmehr wird die Radgewichttiefe an der Radgewichtaufnahme 2 mittels der Anschläge 26 eingestellt und auch die Anschlagpositionierung 34 auf das anzuhebende Radgewicht R eingestellt.

Dann wird mit dem Kran K die Radgewichtmontagevorrichtung zu dem zu montierenden, stehend bevorrateten Radgewicht R verbracht und die Radgewichtaufnahme 2 in die kreisrunde Durchgrifföffnung D des Radgewichts R eingeführt. Nach dem Einführen der Radgewichtaufnahme 2 in den Durchgriff D des Radgewichts R werden alle drei Handhebel 23 in die Verriegelungsposition geschwenkt, sodass die Riegel 22 das Radgewicht R hintergreifen, sodass es nicht von dem Kragarm 1 bzw. der Radgewichtaufnahme 2 abrutschen kann (Fig. 4).

Nunmehr kann die Radgewichtmontagevorrichtung mit aufgenommenen Radgewicht R über den Kran K angehoben werden. Dabei verschwenkt die Hebeöse 33 gegen die Federkraft am oberen Baum 32 bis zur gewählten Anschlagspositionierung 34, sodass die Gesamtanordnung Radgewichtmontagevorrichtung mit aufgenommenem Radgewicht R austariert an der Hebeöse 33 hängt und somit der Kragarm 1 weiterhin horizontal orientiert ist. In diesem Zustand wird die Radgewichtmontagevorrichtung mit dem Kran K und unter manuellem Dirigieren an den Handgriffen 35 so an das Rad an der mit dem Radgewicht R zu versehenden Landmaschine L (Fig. 5) herangeführt, dass das Radgewicht R in die Felge geführt wird.

Nunmehr wird über den frei zugänglichen Betätigungsraum 20, der sich zwischen den Tragkufen 21 der Radgewichtaufnahme 2 aufspannt, die richtige Positionierung des Radgewichts ermittelt und nötigenfalls das Radgewicht R um die Kragarmachse 10 verdreht. Da die Radgewichtaufnahme 2 über Wälzlager trotz des hohen Gewichts des Radgewichtes R leicht verdrehbar ist, können die Befestigungsbohrungen für das Radgewicht leicht ausgerichtet und mit entsprechenden Bolzen ober Radschrauben festgesetzt werden. Dabei erlaubt der freie Betätigungsraum 20 zwischen den Tragkufen 21 der Radgewichtaufnahme 2 einen ausreichend freien Zugang, sodass die Montage sachgerecht und ohne Verletzungsgefahr durchgeführt werden kann (Fig. 4).

Wenn das Radgewicht ordnungsgemäß am Rad des landwirtschaftlichen Fahrzeugs L montiert ist, können dann die Handhebel 23 entriegelt und somit die hintergreifenden Riegel 22 in ihre Freistellung verschwenkt werden. Nunmehr kann unter Zuhilfenahme des Kranes K und der Handgriffe 35 die Radgewichtmontagevorrichtung mit Ihrer Radgewichtaufnahme 2 aus dem Durchgriff D des Radgewichts R herausgeführt werden. Da nunmehr das Radgewicht R nicht mehr die Radgewichtmontagevorrichtung belastet, schwenkt die Hebeöse 33 wieder federkraftbedingt in ihre ursprüngliche Stellung zurück, sodass die Radgewichtmontagevorrichtung weiterhin mit dem Kragarm 1 horizontal austariert ist. Nunmehr kann die Radgewichtmontagevorrichtung für das Montieren des Radgewichts R auf der anderen Seite der landwirtschaftlichen Maschine L verwendet werden.

Das Abbauen von Radgewichten R erfolgt in entsprechend umgekehrter Reihenfolge, wie soeben beschrieben.

### Bezugszeichenliste

- 1: Kragarm
- 10: Kragarmachse
- 11: freies Ende
- 12: Gabelstapleraufnahme
- 13: Gabelstaplerrechteckrohr
- 14: Fahrwerk
- 15: Rad, Rangierrad

- 2: Radgewichtaufnahme
- 20: Betätigungsraum
- 21: Tragkufe
- 22: Hintergreifungsmittel
- 23: Betätigungsmittel
- 24: Schwenkachse
- 25: Auflage
- 26: Anschlag
- 27: Freiraum
- 28: Welle
- 29: Wälzlager

- 3: Ladegeschirrbaum
- 31: unterer Baum
- 32: oberer Baum
- 33: Hebeöse
- 34: Anschlagpositionierung
- 35: Handgriff

- D: Durchgriff
- K: Kran
- L: landwirtschaftliche Maschine
- R: Radgewicht

## Patentansprüche

1. Radgewichtmontagevorrichtung für An- und Abbau eines Radgewichts (R) an einem Fahrzeugrad, insbesondere für landwirtschaftliche Zugmaschinen (L), wobei das Radgewicht (R) im Wesentlichen eine Kreisringscheibe mit einem zentralen Durchgriff (D) ist, **dadurch gekennzeichnet, dass** ein länglicher Kragarm (1) mit einem freien Ende (11) vorgesehen ist, auf dem eine um die Kragarmachse (10) des Kragarms (1) frei drehbare Radgewichtaufnahme (2) angeordnet ist, wobei die Radgewichtaufnahme (2) wenigstens drei zur Kragarmachse (10) parallel und radial so beabstandete Tragkufen (21) hat, sodass es in den zentralen Durchgriff (D) des Radgewichts (R) einschiebbar ist.

2. Radgewichtmontagevorrichtung nach Anspruch 1, **dadurch gekennzeichnet, dass** am freien Ende (11) der Radgewichtaufnahme von einer freigegebenen in eine hintergreifende Stellung verstellbare Hintergreifungsmittel (22) vorgesehen sind, die in hintergreifender Stellung das Radgewicht (R) auf der Radgewichtaufnahme (2) arretieren.

3. Radgewichtmontagevorrichtung nach Anspruch 2, **dadurch gekennzeichnet, dass** das Hintergreifungsmittel (22) einen um eine parallel zur Kragarmachse (10) und den Kufen (21) angeordnete Drehachse (10) verschwenkbaren Riegel hat, der über ein an der dem freien Ende (11) gegenüberliegenden Seite angeordnetes Betätigungsmittel (23) betätigbar ist.

4. Radgewichtmontagevorrichtung nach Anspruch 1, 2 oder 3, **dadurch gekennzeichnet, dass** innerhalb des zentralen Durchgriffs (D) zwischen den Kufen (21) und dem Kragarm (1) ein frei zugänglicher Betätigungsraum (20) verbleibt, um die Befestigungsmittel für das Radgewicht (R) lösen oder ansetzen zu können.

5. Radgewichtmontagevorrichtung nach Anspruch 1, 2, 3 oder 4, **dadurch gekennzeichnet, dass** die Tragkufen (21) mit Auflagen (25) aus einem festen und gleitfähigen Kunststoff versehen sind.

6. Radgewichtmontagevorrichtung nach Anspruch 1, 2, 3, 4 oder 5, **dadurch gekennzeichnet, dass** der Kragarm (1) mit einem Ladegeschirrbaum (3) fest verbunden ist, der eine Hebeöse (33) nahe über dem Schwerpunkt der Radgewichtmontagevorrichtung mit dem Radgewicht (R) hat.

7. Radgewichtmontagevorrichtung nach Anspruch 6, **dadurch gekennzeichnet, dass** der Ladegeschirrbaum (3) aus einem unteren Baum (31), der nahezu senkrecht zum Kragarm (1) ausgerichtet ist, und einem oberen Baum (32) besteht, wobei der obere Baum (32) in einem Winkel von 110° bis 150°, insbesondere 120° bis 140°, zum unteren Baum (31) über dem Kragarm (1) ausgerichtet ist.

8. Radgewichtmontagevorrichtung nach Anspruch 7, **dadurch gekennzeichnet, dass** am oberen Baum (32) die Hebeöse (33) gegen eine Federkraft verschwenkbar oder verschiebbar ausgebildet ist.

9. Radgewichtmontagevorrichtung nach Anspruch 6, 7 oder 8, **dadurch gekennzeichnet, dass** am Ladegeschirrbaum (3) Handgriffe (35) und/oder Rangierräder (15) vorgesehen sind.

10. Radgewichtmontagevorrichtung nach Anspruch 1, 2, 3, 4 oder 5, **dadurch gekennzeichnet, dass** der Kragarm (1) eine Gabelstapleraufnahme (12) für eine Gabel eine Gabelstaplers aufweist.

11. Verfahren für An- und Abbau eines Radgewichts (R) an einem Fahrzeugrad, insbesondere für landwirtschaftliche Zugmaschinen (L), wobei das Radgewicht (R) im Wesentlichen eine Kreisringscheibe mit einem zentralen Durchgriff (D) ist, unter Zuhilfenahme einer Radgewichtmontagevorrichtung gemäß der vorangehenden Ansprüche, **dadurch gekennzeichnet, dass** die frei drehbare Radgewichtaufnahme (2) mit ihren wenigstens drei zur Kragarmachse (10) parallel und radial beabstandeten Tragkufen (21) in den zentralen Durchgriff (D) des Radgewichts (R) eingeschoben und arretiert wird, die Radgewichtsmontagevorrichtung angehoben und das auf der Radgewichtsmontagevorrichtung aufgenommene Radgewicht am Fahrzeugrad der landwirtschaftlichen Zugmaschine (L) zentriert vorgehalten wird, um das Radgewicht am Fahrzeugrad befestigen zu können.

## Claims

1. A wheel weight mounting device for attachment and removal of a wheel weight (R) to/from a vehicle wheel, in particular for agricultural tractors (L), wherein the wheel weight (R) is substantially an annular disc with a central through-passage (D), **characterised in that** there is provided an elongate cantilever arm (1) with a free end (11) on which there is arranged a wheel weight receiver (2) freely rotatable about the cantilever arm axis (10) of the cantilever arm (1), wherein the wheel weight receiver (2) has at least three supporting runners (21) spaced apart radially and parallel to the cantilever arm axis (10), such that it can be pushed into the central through-passage (D) of the wheel weight (R).

2. A wheel weight mounting device according to claim 1, **characterised in that** at the free end (11) of the wheel weight receiver there are provided means (22) for engagement behind which are adjustable from a released position into an engaging-behind position, which means lock the wheel weight (R) on the wheel weight receiver (2) in the engaging-behind position.

3. A wheel weight mounting device according to claim 2, **characterised in that** the means (22) for engagement behind have a bolt pivotable about a rotational axis (10) arranged parallel to the cantilever arm axis (10) and the runners (21), which bolt is actuatable via an actuating means (23) arranged at the side opposite the free end (11).

4. A wheel weight mounting device according to claim 1, 2 or 3, **characterised in that** within the central through-passage (D) there remains a freely accessible actuating space (20) between the runners (21) and the cantilever arm (1), in order to be able to release or attach the securing means for the wheel weight (R).

5. A wheel weight mounting device according to claim 1, 2, 3 or 4, **characterised in that** the supporting runners (21) are provided with coverings (25) of a solid and slideable plastics material.

6. A wheel weight mounting device according to claim 1, 2, 3, 4 or 5, **characterised in that** the cantilever arm (1) is securely connected to a loading gear boom (3) which has a lifting eye (33) closely above the centre of gravity of the wheel weight mounting device with the wheel weight (R).

7. A wheel weight mounting device according to claim 6, **characterised in that** the loading gear boom (3) consists of a lower boom (31), oriented virtually perpendicular to the cantilever arm (1), and an upper boom (32), wherein the upper boom (32) is oriented above the cantilever arm (1), at an angle from 110° to 150°, in particular 120° to 140°, to the lower boom (31).

8. A wheel weight mounting device according to claim 7, **characterised in that** on the upper boom (32), the lifting eye (33) is pivotable or displaceable against a spring force.

9. A wheel weight mounting device according to claim 6, 7 or 8, **characterised in that** hand grips (35) and/or manoeuvring wheels (15) are provided at the loading gear boom (3).

10. A wheel weight mounting device according to claim 1, 2, 3, 4 or 5, **characterised in that** the cantilever arm (1) has a forklift receiver (12) for a fork of a forklift.

11. A method for attachment and removal of a wheel weight (R) to/from a vehicle wheel, in particular for agricultural tractors (L), wherein the wheel weight (R) is substantially an annular disc with a central through-passage (D), with the aid of a wheel weight mounting device according to the preceding claims, **characterised in that** the freely rotatable wheel weight receiver (2) with its at least three supporting runners (21) spaced apart radially and parallel to the cantilever arm axis (10) is pushed into the central through-passage (D) of the wheel weight (R) and locked, the wheel weight mounting device is raised and the wheel weight received on the wheel weight mounting device is kept centred on the vehicle wheel of the agricultural tractor (L), in order to be able to secure the wheel weight on the vehicle wheel.

## Revendications

1. Dispositif de montage d'un poids de roue pour monter et démonter un poids de roue (R) sur une roue de véhicule, en particulier pour des tracteurs agricoles (L), le poids de roue (R) étant essentiellement une bague circulaire avec un passage central (D), **caractérisé en ce qu'**il est prévu un bras en porte-à-faux (1) pourvu d'une extrémité libre (11) sur laquelle est disposé un support de poids de roue (2) pouvant tourner librement autour de l'axe de bras en porte-à-faux (10) du bras en porte-à-faux (1), le support de poids de roue (2) ayant au moins trois patins porteurs (21) parallèles à l'axe de bras en porte-à-faux (10) et espacés radialement de telle sorte qu'il peut être inséré dans le passage central (D) du poids de roue (R).

2. Dispositif de montage d'un poids de roue selon la revendication 1, **caractérisé en ce que** des moyens de prise par l'arrière (22) sont prévus à l'extrémité libre (11) du support de poids de roue, lesquels moyens sont réglables d'une position déverrouillée à une position de prise par l'arrière, et, dans la position de prise par l'arrière, immobilisent le poids de roue (R) sur le support de poids de roue (2).

3. Dispositif de montage d'un poids de roue selon la revendication 2, **caractérisé en ce que** les moyens de prise par l'arrière (22) ont un verrou qui peut pivoter autour d'un axe de rotation (10) disposé parallèlement à l'axe de bras en porte-à-faux (10) et aux patins (21), et qui peut être actionné par un élément d'actionnement (23) placé du côté opposé à l'extrémité libre (11).

4. Dispositif de montage d'un poids de roue selon la revendication 1, 2 ou 3, **caractérisé en ce qu'**un espace d'actionnement (20) librement accessible reste à l'intérieur du passage central (D) entre les patins (21) et le bras en porte-à-faux (1) afin de pouvoir défaire ou fixer les moyens de fixation du poids de roue (R).

5. Dispositif de montage d'un poids de roue selon la revendication 1, 2, 3 ou 4, **caractérisé en ce que** les patins porteurs (21) sont munis de revêtements (25) réalisés en matière plastique rigide et glissante.

6. Dispositif de montage d'un poids de roue selon la revendication 1, 2, 3, 4 ou 5, **caractérisé en ce que** le bras en porte-à-faux (1) est fermement fixé à un mât de levage (3) ayant un œillet de suspension (33) à proximité au-dessus du centre de gravité du dispositif de montage d'un poids de roue avec le poids de roue (R).

7. Dispositif de montage d'un poids de roue selon la revendication 6, **caractérisé en ce que** le mât de levage (3) est constitué d'un bras inférieur (31) orienté presque perpendiculairement au bras en porte-à-faux (1), et d'un bras supérieur (32), le bras supérieur (32) étant orienté au-dessus du bras en porte-à-faux (1) selon un angle de 110° à 150°, en particulier de 120° à 140°, par rapport au bras inférieur (31).

8. Dispositif de montage d'un poids de roue selon la revendication 7, **caractérisé en ce que** l'œillet de suspension (33) est conçu pour pouvoir pivoter ou se déplacer sur le bras supérieur (32) contre la force d'un ressort.

9. Dispositif de montage d'un poids de roue selon la revendication 6, 7 ou 8, **caractérisé en ce que** des poignées (35) et/ou des roues de manoeuvre (15) sont prévues sur le mât de levage (3).

10. Dispositif de montage d'un poids des roues selon la revendication 1, 2, 3, 4 ou 5, **caractérisé en ce que** le bras en porte-à-faux (1) présente un logement de fourche de chariot élévateur (12) pour une fourche d'un chariot élévateur.

11. Procédé pour monter et démonter un poids de roue (R) sur une roue de véhicule, en particulier pour des tracteurs agricoles (L), à l'aide d'un dispositif de fixation d'un poids de roue selon les revendications précédentes, le poids de roue (R) étant essentiellement une bague circulaire avec un passage central (D), **caractérisé en ce que** le support de poids de roue (2), avec ses au moins trois patins porteurs (21) parallèles à l'axe de bras en porte-à-faux (10) et espacés radialement et qui peut tourner librement, est inséré et bloqué dans le passage central (D) du poids de roue (R), le dispositif de montage d'un poids de roue est soulevé, et le poids de roue reçu sur le dispositif de montage d'un poids de roue est maintenu centré sur la roue de véhicule du tracteur agricole (L) pour pouvoir fixer le poids de roue sur la roue de véhicule.
